(19) Europäisches Patentamt / European Patent Office / Office européen des brevets

(11) **EP 2 485 010 B1**

(12) **EUROPEAN PATENT SPECIFICATION**

(45) Date of publication and mention
of the grant of the patent:
**06.08.2014 Bulletin 2014/32**

(51) Int Cl.:
***G01B 11/245*** (2006.01)

(21) Application number: **11153252.9**

(22) Date of filing: **03.02.2011**

(54) **Method for measuring a rail profile by optical triangulation and corresponding measuring system**

Verfahren zur Messung eines Schienenprofils mittels optischer Triangulation und entsprechendes Messsystem

Procédé de mesure d'un profil de rail par triangulation optique et système de mesure correspondant

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.08.2012 Bulletin 2012/32**

(73) Proprietor: **DMA S.r.l.**
**10129 Torino (IT)**

(72) Inventor: **Santanera, Cesare**
**10129 Torino (IT)**

(74) Representative: **Gallarotti, Franco**
**Buzzi, Notaro & Antonielli d'Oulx S.r.l.**
**Via Maria Vittoria, 18**
**10123 Torino (IT)**

(56) References cited:
**US-A1- 2002 024 677     US-A1- 2003 140 509
US-A1- 2006 017 935**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention regards methods for measuring a rail profile by optical triangulation through optical detection systems by optical triangulation moving along said rail comprising respective pairs of light emitting lasers and optical reading devices including the steps of:

- lighting opposite sides of the rail through the respective light emitting lasers, for projecting against said sides respective light spots adapted to generate respective optically detectable semi-profiles combinable to obtain a measurement of the profile of a section of the rail, and
- detecting said semi-profiles through the respective optical reading devices,

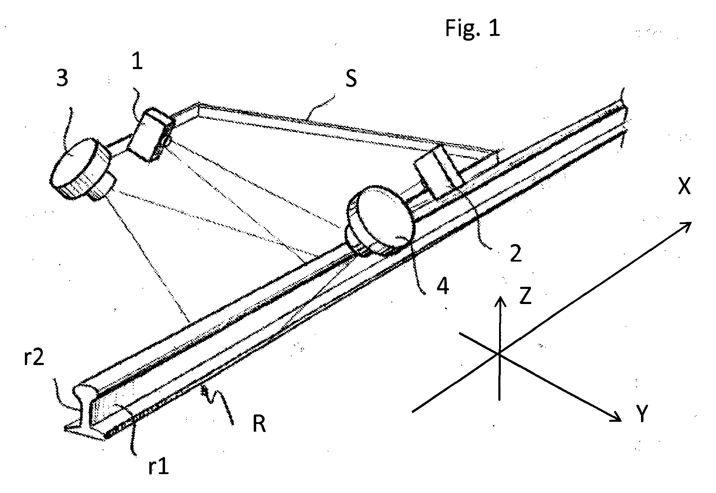

Measuring the profile of the rails for verifying irregularities in the geometries thereof due to stress and wear is known. In general, use of methods and systems like the one schematically shown in figure 1, where indicated with R is a railway rail whose opposite sides, outer and inner, are respectively indicated with r1, r2 is known. X is used to indicate a longitudinal direction of the rail R, Y is used to indicate a lateral direction, Z is used to indicate a vertical direction.

S schematically shows a support, normally integral with a railway vehicle, which is configured so as to bear - on sides parallel to the sides r1 and r2 - two analogous optical triangulation detection systems, each of which includes a light emitter 1, 2, in particular a laser emitter, and an optical reading device 3, 4, in particular a camera.

Each light emitter 1, 2 is prearranged so as to project against the facing side r1, r2 of the rail R a laser beam which determines a thin light spot adapted to generate, together with the light beam projected by the other emitter, an optical image of the section of the rail R.

The two optical reading devices 3, 4 are arranged in a manner such that each of them forms - with the respective light emitter 1, 2 - an angle located in a plane orthogonal to the optical image of the rail R, in particular in the plane XY.

Thus, two analogous detection systems - each formed by an emitter and by the reading device associated thereto, one for each side of the rail - are used with such method. A difficulty lies in the fact that there is required a superimposition between the two lighted parts of profile and it is inevitable that the light spot of each side partly lights the other. Should the two light spots not be perfectly coplanar, the two systems interfere with each other, thus generating erroneous measurements.

In order to guarantee that the measurements occurs at slightly different times so as to prevent the two systems from interfering with each other, lighting the light spots one at a time, determines a loss of accuracy due to the fact that the measuring system moves along the rail, the loss of accuracy being even more marked in case of vibrations.

Overcoming such drawback through a measuring method in which the abovementioned light spots projected by said two light emitters are of different colours, is thus known from the Italian patent IT1308420. The laser generators are prearranged to generate a laser beam, for example red, for one of the two sides, and infrared for the other side.

Such solution is disadvantageous when using a high sampling frequency and thus a short period of exposure is required. A short period of exposure can actually be obtained by using a high power laser in combination with a high sensitivity camera. Such requirements can be obtained at a low cost only by operating with light in the near infrared field, otherwise it would require using special components which may double or triplicate the cost of the system.

The present invention aims at overcoming the abovementioned drawbacks, by measuring the profiles with high sampling frequency without using different wavelengths and thus at a low cost.

Document US2002/0024677 A1 discloses a detection system operating by triangulation which measures lumber using cameras viewing the same spot.

Document US2006/017935 A1 discloses a method for measuring dimensions of an object having a plurality of emitters and camera arranged about a center axis of the object.

Document US2003/140509 A1 discloses a method for measuring the profile of a rail by triangulation using multiple measurement units to obtain a complete profile.

The above-mentioned object can be attained by a method according to the independent method claim 1 and an apparatus according to the independent apparatus claim 10.

Preferred embodiments are subject of the dependent claims 2 to 9 and 11 to 13.

The invention shall be described with reference to the attached drawings, provided purely by way of nonlimiting example, wherein:

- figure 1 is has already been described above;
- figure 2 schematically represents in plan view the measuring system implementing the method according to the invention;
- figure 3 schematically represents a rail measured according to an embodiment of the method according to the invention;
- figure 4 schematically represents a rail measured according to a further embodiment of the method according to the invention:

- figure 5 represents a time diagram illustrating the operation of the embodiment of figure 3;
- figure 6 represents a time diagram illustrating the operation of the embodiment of figure 4.

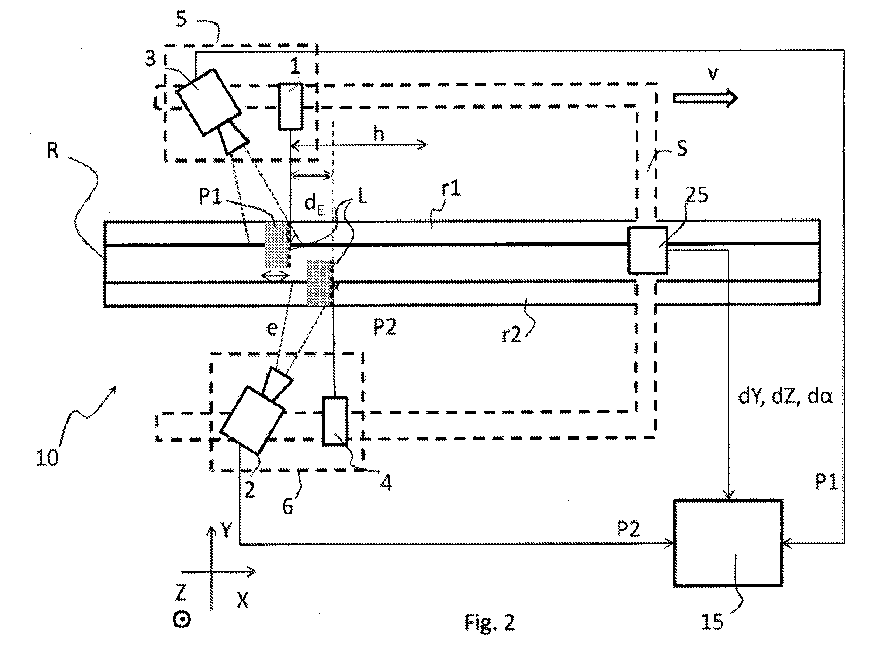

A system implementing the method according to the invention is illustrated schematically in plan view in figure 2.

Such system indicated as a whole by the reference 10 provides - analogously to the system of figure 1 - that on the support S normally integral with a railway vehicle, not shown in figure 2, there be mounted on one side, corresponding to the side r1, and on the opposite side, corresponding to the side r2, of the rail R two optical triangulation detection systems, respectively 5 and 6, each which includes a respective pair of laser emitters, 1 or 2, and an optical reading device, 3 or 4, in particular a camera, preferably a CMOS or even CCD camera. The relative arrangement of each laser emitter-camera pair is analogous to the one represented in figure 1 so that each laser emitter 1, 2 is prearranged so as to project against the facing side r1, r2 of the rail R a thin light spot L adapted to generate, together with the light spot projected by the other laser emitter, an optical image of the section of the rail R, in particular generating respective semi-profiles P1 and P2 detectable optically, acquired through the cameras 3, 4 and to be composed to obtain the overall profile of the measured rail R. Such light spot L is in particular obtained by focusing - in a laser plane vertical with respect to the plane of the rail R, for example through a cylindrical lens - the beam emitted by the laser emitter 1 or 2. The measuring methods operating by optical triangulation of profiles of the rail, or even of the wheel, which enable identifying the profile from the optical image of the light spot on the rail acquired at the camera, are in general known, for example from the internet publication "OMC Technical Brief: Single Point Optical Triangulation" (available at http://www.optical-metrology-centre.com/Downloads/Tech_Briefs/TechBrief_SinglePtOptica lTriangulation.pdf) and thus shall not be illustrated in detail hereinafter.

However, according to a main aspect of the method according to the invention, it is provided for that the laser emitter 1 and the laser emitter 2, be provided for along the longitudinal axis of the rail R, i.e. of the advancement or movement axis of the railway vehicle, indicated as axis X, at a determined distance d with respect to each other. In particular, in the example of figure 1, the laser emitters 1 and 2 are arranged at a distance d on the support S. In other words, the detection systems 5 and 6 move along the rail R maintaining a distance d with respect to each other.

An electronic control module, for example a processor, which controls the operations of the system 10 is indicated with 15 in figure 2. Such control module 15 is configured for controlling the actuation of the detection systems 5 and 6 for detecting the semi-profiles P1 and P2, in particular the actuation times, of the laser emitters 1 and 2. Furthermore, such control module 15 is configured to receive from the camera 3 and from the camera 4 respective semi-profiles P1 and P2, measured by acquiring the optical image of the outer side r1 and of the inner side R2, and it is configured for performing the combination of such semi-profiles P1 and P2 to obtain the overall profile of the rail R.

According to a main aspect of the invention, the control module 15 is configured for actuating the laser emitters 1 and 2 to emit the laser radiation to two different detection instants, respectively a first instant $t_1$ and a second instant $t_2$. The laser radiation is kept switched on by each laser emitter 1 or 2 for a time, or period, of exposure $t_E$, which determines the lighting of a section of length $d_E$ of the rail R, as indicated in figure 2.

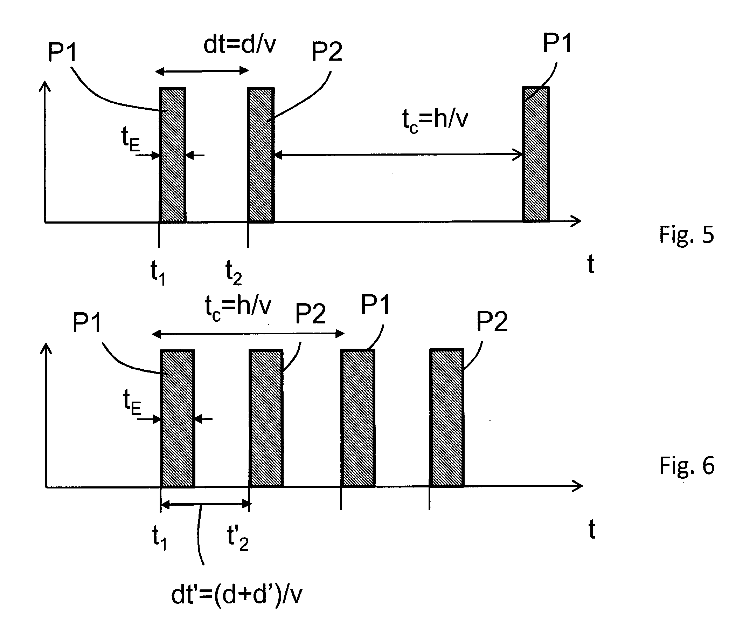

Therefore, each laser emitter-camera pair obtains an image of a semi-profile P1 or P2 for a period of exposure $t_E$. According to the invention, also as illustrated with reference to the time diagram of figure 5, which shows the lighting times of the laser emitters 1 and 2, it is provided for that a difference dt between the detection instants $t_1$ and $t_2$, thus $dt=t_2- t_1$ be greater or equivalent to such period of exposure $t_E$ so that the emitter 1 and the emitter 2 do not interfere with each other, since the emitter 1 generally switches off before the emitter 2 switches on. Thus, in particular in this manner each camera 3, 4 sees the light generated by the laser emitter 1, 2 thereof with which the camera was calibrated.

The camera 3 or 4 is preferably a digital camera which operates at a high speed (normally greater than 400 frames per second). Such camera 3 or 4 operates for this purpose preferably reading all the image rows in a synchronous manner, to obtain high speed alongside high processing capacity of the image in real time, with the aim of measuring using the optical triangulation method. In the current implementation, it is provided for to operate up to a speed of acquisition of 700 images per second, processing 500 rows per image, for example using an FCAM DMA camera. The laser emitters 1, 2 are adapted to produce beams preferably at the same wavelength (in order to unify the components), just like the cameras 3, 4 are provided with interferential filters for acquiring the image determined by the light spot L projected by the respective laser emitter 1, 2 purifying it from the effect of other sources of light.

The laser emitters 1, 2 are preferably semiconductor lasers, due to costs and robustness reasons.

The period of exposure $t_E$ varies for example between 0.2 and 3 milliseconds. Such values refer to CMOS cameras at the state of the art regarding sensitivity and a laser having power between 4 and 40W. The selected power value depends on the type of track and on the characteristics intended to be measured, exchanges generally requiring the highest power given that the vision angles of the cameras are unfavourable.

According to a further main aspect of the invention, an inertial platform 25 is provided for on the support S. Actually, the railway vehicle carrying the support S usually moves with respect to the track of the rail R, vertically in direction Z and laterally in direction Y, and also with a roll motion. Given that the overall profile is measured in a coordinates system rigid with the system 10, which moves with the railway vehicle, there is provided for the use of the inertial platform 25, which provides - normally for 20 seconds measuring intervals of maximum duration (with the required accuracy with the aim of compensating such relative movements with respect to the rail; reduction of accuracy leads to extension of the period), information regarding the set-up of the support S or of the system 10 with respect to a previous instant, in particular providing shifts dX, dY, dZ along the axes X, Y, Z, with respect to the system of reference defined by the rail R. The platform 25 also provides the rotation, pitch and roll angles. As mentioned, even though all the previously mentioned variations can be taken into account, the method according to the invention preferably provides for using the variations dZ in vertical direction Z and dY laterally in direction Y, possibly also using the angle shift $d\alpha$ regarding the roll angle. Such platform 25 provides the information regarding the variations for example with the accuracy of a tenth of mm.

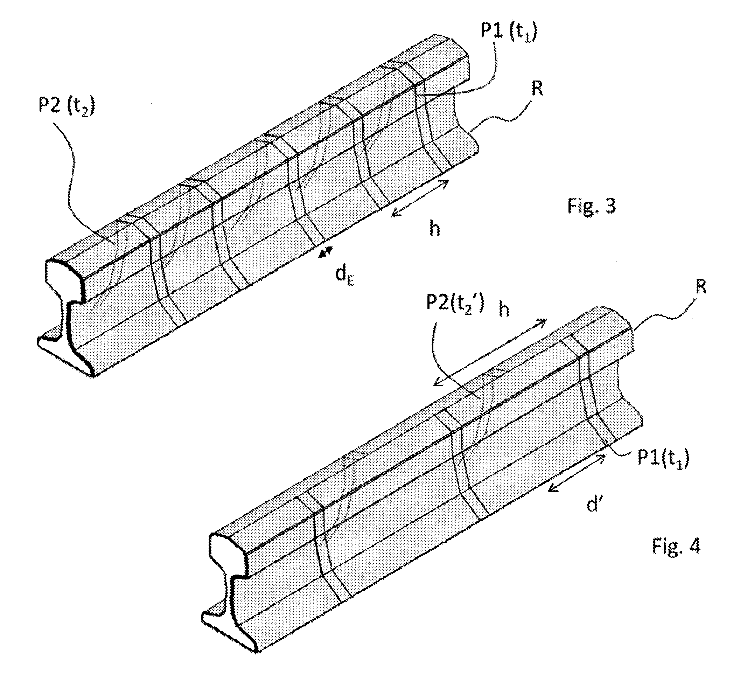

Thus, according to a first measuring method, illustrated with reference to figures 3 and 5 it is provided for actuating the inner camera 3 which measures the side r1 and the outer camera 4 which measures the side r2 so as to measure the same section of the rail R, operating as follows:

when the railway vehicle carrying the support S advances, in direction X at speed v, the inner camera 3 is actuated first, at the first detection instant $t_1$, thus the control module 15, which controls the measuring system 10, waits for the railway vehicle to be moved by the given distance d, for example 25 mm, and actuates the outer camera 4 at the corresponding detection instant $t_2$, so that the difference dt between the times $t_1$ and $t_2$ is equivalent to the ratio between the given distance d and the speed of the train dt=d/v. Vice versa, when the railway vehicle moves backwards, the outer camera 4 is actuated first, then the control module 15, waits for the railway vehicle to be moved backwards by the given distance d, and actuates the inner camera 3.

The subsequent measurement, in which the subsequent pair of semi-profiles P1 and P2 is acquired, is actuated after covering a given interval or sampling distance h, for example 60 mm, corresponding to a sampling time $t_c$, where $t_c$=h/v. This enables recomposing a complete section of the rail R at each sampling interval from the semi-profiles P1 and P2 respectively measured by the camera 3 and 4 at the detection instants $t_1$ and t2, which end up e acquired at the same coordinate along the axis X, even the cameras 3 and 4 are offset with respect to each other by the distance d on the support S.

However, in order to recompose the overall profile, the module 15, before recomposing the entire profile joining the two semi-profiles P1 and P2, preferably corrects the spatial position of one of the semi-profiles P1 or P2, i.e. the spatial points or coordinates thereof acquired in the control module 15, moving the detected points of one of such two semi-profiles P1, P2 by offset distances equivalent to the variations indicated by the inertial platform 25. The first acquired semi-profile P1 is usually used as reference and the second semi-profile P2 is placed with reference to it. In a preferred version, it is provided for moving the offset distance corresponding only to the measured shifts dY and dZ from the platform 25 along the axis Y and Z, but - as mentioned - in some cases it may also be required to compensate the roll with the corresponding angle shift $d\alpha$, depending on the speed and the type of suspensions of the vehicle.

Generally, when the railway vehicle travels at a speed v such that, according to the value of the given distance d, the difference dt between the detection instants $t_2$ and $t_1$ is smaller than the required period of exposure, i.e. dt=$t_2$-$t_1$<$t_E$ it is necessary to delay the second instant $t_2$ at which the acquisition of the second semi-profile P2 starts until the period of exposure $t_E$ of the first semi-profile P1 ends, definitely detecting, in such condition, the second semi-profile P2 not at the same coordinate on the longitudinal axis X, but with an additional displacement d' along such axis X. In other words, there is provided for acquisition of the second profile after the detection systems 5 and 6 are moved by the given distance d, which is in particular fixed with respect to the support S or to railway vehicle, plus the additional displacement d'.

The difference dt between the detection instants $t_2$ and $t_1$ is, analogously, to be compared with the minimum period of acquisition $t_a$, inverse with respect to a maximum frequency $f_{max}$ of acquisition of the camera 3 and 4. Such minimum period of acquisition $t_c$ is of the order of magnitude of the period of exposure $t_E$ and it is determined by the times of transfer of the image through the acquisition device (CCD or CMOS) and up to an image storage chip.

Should such minimum period of acquisition $t_a$ be greater than the period of exposure $t_E$, then such minimum period of acquisition $t_a$ should considered instead of the required period of exposure $t_E$ for evaluating the condition on the difference of the times of acquisition, i.e. if dt=$t_2$-$t_1$<$t_a$. Hereinafter, reference shall be made to a minimum measurement period $t_i$ of the detection system 5,6, defined as the greater one between the minimum period of acquisition $t_a$ and the period of exposure $t_E$. Therefore, according to a further embodiment, rather than acquiring series of complete sections of the rail R - whose length $d_E$ is determined by the period of exposure $t_E$ acquired at regular intervals, i.e. the sampling distance h, at the same coordinate on the longitudinal axis X - it is provided operating a sampling of the surfaces of the sides r1 and r2 by acquiring the semi-profiles P1 and P2, so that the second profile P2 detected at the second or subsequent detection instant, is detected at a delayed detection instant $t'_2$, causing a delayed time difference dt'. Generally it shall be:

$$dt'=t'_2-t'_1 = (d+d')/v >= ti.$$

The detection instants $t_1$ and $t'_2$ are controlled so that the corresponding semi-profiles P1 and P2 are respectively acquired on each side r1 and r2 at the sampling distance h on the rail R, along the movement axis X.

The additional displacement d' is preferably selected the lowest possible, the minimum value thereof being defined by the maximum period of exposure $t_E$ and the maximum frequency $f_{max}$ of the camera 3, 4.

Thus, the additional displacement d' may be selected through various criteria:

- should one desire the maximum sampling density of the profiles, then the system should be configured so that $t'_2-t_1 = t_i$
- should one desire to maintain the sampling spatial frequency more constant, it shall be $t'_2-t_1 > t_i$, where the delayed instant $t'_2$ may be selected dynamically so as to keep the additional displacement d' constant, within a given range of speed values v.

Upon measuring a pair of semi-profiles P1, P2, at the same coordinate along the axis X or offset, of the additional displacement d', it is necessary to resume the measurement cycle after the measuring system 10 has moved by a sampling distance h. It is also possible that the same difficulty mentioned above arises in this case too, the sampling distance h is smaller than the product between speed v and the minimum measurement period of the system $t_i$ i.e. $h<v*t_i$ if, for example the speed v reaches high values. In such case, it is however necessary to wait for the minimum measurement period $t_i$ before starting a new cycle for measuring a pair of semi-profiles P1, P2. The sampling distance h can be selected so as to wait longer than the minimum period of system $t_i$, with the aim of maintaining a constant sampling distance h in a given range of values of speed v.

The value of the sampling distance h is also selected with respect to the average size or to the spatial frequency of the variations of profile or position thereof in the plane YZ, so as to enable reconstructing the shape according to the Nyquist-Shannon theorem, for example so as to determine a spatial frequency greater than twice the spatial frequency or spatial frequency bandwidth of the profile variations.

The semi-profiles P1, P2 acquired on the side r1 or r2 are thus displaced in the three-dimensional space of the offset or shift values, in particular dY, dZ, provided by the inertial platform 25, also possibly compensating the roll through the variation of the roll angle dα. Joining the semi-profiles P1, P2 with the translation surfaces, whose position was corrected through the inertial platform 25, allows providing a three-dimensional reconstruction of the outer surface of the rail R through interpolation.

An interpolation method may consist in identifying characteristic points of the rail R, such as for example the corners or the highest point or points, and join them with lines or curves on which there can be extracted sections with positions along the arbitrary axis X. An actual interpolation of the entire surface is usually not required.

The two embodiments of the method described with reference to figures 3 and 4, which use the difference dt for measuring at the same longitudinal coordinate along the axis X or the delayed difference dt', can be implemented in the same system, for example the system 10, which automatically switches, for example through the control module 15 which monitors the movement speed v thereof with respect to the rail R, from one mode to another according to such speed v, in particular switching depending on whether such speed v determines a difference of acquisition times greater or smaller than the measuring time $t_i$.

The previously described solutions allow attaining considerable advantages with respect to the known solutions.

Advantageously, the described method and system allow measuring the profiles of the rails at a high sampling frequency without using different wavelengths and thus at a low cost, through low cost laser emitters, for example a semiconductor. The profiles are accurately measured even using a moving system, through an alternating use of the laser emitters related to the speed of the measuring system which thus do not interfere with each other and through the correction originating from the measurements of the inertial platform.

Furthermore, the method and system described above may be used for obtaining a three-dimensional reconstruction of the surface when the longitudinal speed of the measuring system with respect to the rail (speed of the carrying train) does not allow the coincidence of the measurement point of the inner and outer semi-profile.

**Claims**

1. Method for measuring a rail profile (R) by optical triangulation through optical detection systems (5, 6), operating by optical triangulation and moving along said rail (R) at a movement speed (v), comprising respective pairs of light emitting lasers (1,2) and optical reading devices (3, 4) including the steps of:

EP 2 485 010 B1

- moving said optical detection systems (5, 6) along said rail (R) at a movement speed (v), and
- lighting opposite sides (r1, r2) of the rail (R) through the respective light emitting lasers (1, 2), for projecting against said sides (r1, r2) respective light spots (L) adapted to generate respective optically detectable semi-profiles (P1, P2) combinable to obtain a measurement of the profile of a section of the rail (R), and
- detecting said semi-profiles (P1, P2) through the respective optical reading devices (3, 4),

**characterised in that** the method
provides arranging said moving optical detection systems (5, 6) by optical triangulation at a given distance (d) with respect to each other along the direction of movement (X) and actuates each detection system (5, 6) at a respective detection instant ($t_1$, $t_2$; $t_1$, $t'_2$) for detecting a semi-profile (P1, P2) of the respective side (r1, r2) of the rail (R), the difference (dt; dt') between said respective detection instants ($t_1$, $t_2$; $t_1$, $t'_2$) being selected according to the movement speed (v) of the pair of laser emitters (1, 2) with respect to the rail and to said given distance (d).

2. Method according to claim 1, **characterised in that** it comprises an inertial platform (25), integral with said moving optical detection systems (5, 6) by optical triangulation, configured for measuring spatial variations (dY, dz, d$\alpha$) of said optical detection systems (5, 6) by optical triangulation with respect to such rail (R), said method further comprising correcting the spatial position of at least one of said semi-profiles (P1, P2) of each side (r1, r2) through the values of said measured shifts (dY, dz, d$\alpha$) through the inertial platform (25).

3. Method according to claim 1 or 2, **characterised in that** it comprises selecting the difference (dt; dt') between said respective detection instants ($t_1$, $t_2$; $t_1$, $t'_2$) according to a movement speed (v) of the pair of laser emitters (1, 2) with respect to the rail, said given distance (d) and also a measuring time ($t_i$) of the detection system (5, 6), said measuring time ($t_i$) being in particular selected as the greater time between a period of exposure ($t_E$) of the camera and an acquisition period ($t_c$) of the camera.

4. Method according to claim 1 or 2 or 3, **characterised in that** said time difference (dt) is selected equivalent to the ratio between said given distance (d) and said movement speed (v) of the pair of laser emitters (1, 2) with respect to the rail (R) for measuring semi-profiles (P1, P2) at the same longitudinal coordinate (X) on the sides (r1, r2).

5. Method according to claim 1 or 2 or 3, **characterised in that** it comprises delaying a subsequent detection instant ($t'2$) between said detection instant ($t_1$, $t'_2$) so as to determine a delayed time difference (dt') for the detection which is greater or equivalent to the measuring time ($t_i$).

6. Method according to claims 4 and 5, **characterised in that** it comprises
selecting said time difference (dt) equivalent to the ratio between said given distance (d) and said movement speed (v) of the pair of laser emitters (1, 2) with respect to the rail (R) for measuring semi-profiles (P1, P2) at the same longitudinal coordinate (X) on the sides (r1, r2), if said speed (v) is such that said ratio between said given distance (d) and said movement speed (v) is greater than the measuring time ($t_i$)
selecting said delayed time difference (dt') while it is selected delayed if said speed (v) is such that said ratio between said given distance (d) and said movement speed (v) is greater than the measuring time ($t_i$).

7. Method according to claim 5 or 6, **characterised in that** it comprises actuating each detection system (5, 6) for detecting each semi-profile (P1, P2) of the respective side (r1, r2) with a sampling interval such to allow the three-dimensional reconstruction of a side (r1, r2) of the rail (R) by interpolation, the method further comprising correcting the spatial position of said semi-profiles (P1, P2) of each side (r1, r2) through the values of said measured variations (dY, dz, d$\alpha$) through the inertial platform (25), and thus executing an interpolation of such semi-profiles (P1, P2) whose spatial position was corrected, for performing a three-dimensional reconstruction of the rail (R), in particular joining with translation surfaces the semi-profiles (P1, P2) whose spatial position was corrected.

8. Method according to one of claims 2 to 7, **characterised in that** it provides for using the shifts in vertical (dZ) and lateral (dY) direction.

9. Method according to one of the preceding claims, **characterised in that** provides for using cameras (3, 4) which operate by reading the image rows in a synchronous manner.

10. System for measuring a rail profile by optical triangulation comprising movable optical detection systems (5, 6), operating by optical triangulation and movable along said rai (R) at a movement speed (v), said optical detection systems (5, 6) comprising respective pairs of light emitting lasers (1,2) for lighting opposite sides (r1, r2) of the rail

6

(R) for projecting against said sides (r1, r2) respective light spots (L) adapted to generate respective optically detectable semi-profiles (P1, P2) combinable to obtain a profile of the section of the rail (R) and optical reading devices (3, 4), for detecting said semi-profiles (P1, P2),
**characterised in that** said system comprises means configured for implementing the method according to one of claims 1 to 9.

11. System according to claim 10, **characterised in that** said optical detection systems (5, 6) are associated to a support (S) integral with a railway vehicle.

12. System according to claim 11, **characterised in that** said inertial platform (25) is associated to said support (S).

13. System according to one or more of the preceding claims 10 to 12, **characterised in that** it comprises a control module (15) configured for controlling the detection systems and performing said operations for the combination and/or interpolation of the semi-profiles (P1, P2).

## Patentansprüche

1. Verfahren zum Messen eines Schienenprofils (R) mit Hilfe optischer Triangulation durch optische Erfassungssysteme (5, 6), die mit optischer Triangulation arbeiten und sich entlang der Schiene (R) mit einer Bewegungsgeschwindigkeit (v) bewegen, umfassend entsprechende Paare von lichtemittierenden Lasern (1, 2) und optische Lesevorrichtungen (3, 4), umfassend folgende Schritte:

   - Bewegen der optischen Erfassungssysteme (5, 6) entlang der Schiene (R) mit einer Bewegungsgeschwindigkeit (v) und
   - Beleuchten gegenüberliegender Seiten (r1, r2) der Schiene (R) durch die entsprechenden lichtemittierenden Laser (1, 2), um auf diese Seiten (r1, r2) jeweilige Lichtpunkte (L) zu projizieren, die dazu eingerichtet sind, entsprechende optisch erfassbare Halbprofile (P1, P2) zu erzeugen, die kombinierbar sind, um eine Messung des Profils eines Abschnittes der Schiene (R) zu erhalten, und
   - Erfassen der Halbprofile (P1, P2) durch die jeweiligen optischen Lesevorrichtungen (3, 4),

   **dadurch gekennzeichnet, dass**
   das Verfahren das Anordnen der sich bewegenden optischen Erfassungssysteme (5, 6) durch optische Triangulation in einem gegebenen Abstand (d) in Bezug zueinander entlang der Bewegungsrichtung (X) vorsieht und jedes Erfassungssystem (5, 6) bei einem entsprechenden Erfassungsmoment ($t_1$, $t_2$; $t_1$, $t'_2$) betätigt, um ein Halbprofil (P1, P2) der jeweiligen Seite (r1, r2) der Schiene (R) zu erfassen, wobei der Unterschied (dt; dt') zwischen den jeweiligen Erfassungsmomenten ($t_1$, $t_2$; $t_1$, $t'_2$) gemäß der Bewegungsgeschwindigkeit (v) des Paares von Laseremittern (1, 2) in Bezug auf die Schiene und den gegebenen Abstand (d) gewählt wird.

2. Verfahren nach Anspruch 1, **dadurch gekennzeichnet, dass** es eine Trägheitsplattform (25) umfasst, die integraler Bestandteil der sich bewegenden optischen Erfassungssysteme (5, 6) durch optische Triangulation ist und dazu eingerichtet ist, räumliche Abweichungen (dY, dz, $d\alpha$) der optischen Erfassungssysteme (5, 6) durch optische Triangulation in Bezug auf eine derartige Schiene (R) zu messen, wobei das Verfahren weiterhin das Korrigieren der räumlichen Position wenigstens eines der Halbprofile (P1, P2) jeder Seite durch die Werte der gemessenen Verschiebungen (dY, dz, $d\alpha$) durch die Trägheitsplattform (25) umfasst.

3. Verfahren nach Anspruch 1 oder 2, **dadurch gekennzeichnet, dass** es das Wählen des Unterschiedes (dt; dt') zwischen den jeweiligen Erfassungsmomenten ($t_1$, $t_2$; $t_1$, $t'_2$) gemäß einer Bewegungsgeschwindigkeit (v) des Paares von Laseremittern (1, 2) in Bezug auf die Schiene, den gegebenen Abstand (d) und zudem eine Messzeit ($t_i$) des Erfassungssystems (5, 6) umfasst, wobei die Messzeit ($t_i$) insbesondere als die größere Zeit zwischen einer Periode der Belichtung ($t_E$) der Kamera und einer Aufnahmeperiode ($t_c$) der Kamera gewählt wird.

4. Verfahren nach Anspruch 1, 2 oder 3, **dadurch gekennzeichnet, dass** der Zeitunterschied (dt) äquivalent zu dem Verhältnis zwischen dem gegebenen Abstand (d) und der Bewegungsgeschwindigkeit (v) des Paares von Laseremittern (1, 2) in Bezug auf die Schiene (R) gewählt wird, um Halbprofile (P1, P2) an derselben Längskoordinate (X) auf den Seiten (r1, r2) zu messen.

5. Verfahren nach Anspruch 1, 2 oder 3, **dadurch gekennzeichnet, dass** es das Verzögern eines anschließenden Erfassungsmomentes (t'2) zwischen dem Erfassungsereignis (t$_1$, t'$_2$) umfasst, um so einen verzögerten Zeitunterschied (dt') für die Erfassung zu bestimmen, der größer als die Messzeit (t$_i$) oder äquivalent zu dieser ist.

6. Verfahren nach Anspruch 4 und 5, **dadurch gekennzeichnet, dass** es umfasst:

Wählen des Zeitunterschiedes (dt), der äquivalent zu dem Verhältnis zwischen dem gegebenen Abstand (d) und der Bewegungsgeschwindigkeit (v) des Paares von Laseremittern (1, 2) in Bezug auf die Schiene (R) ist, um Halbprofile (P1, P2) an derselben Längskoordinate (X) auf den Seiten (r1, r2) zu messen, sofern die Geschwindigkeit (v) derart beschaffen ist, dass das Verhältnis zwischen dem gegebenen Abstand (d) und der Bewegungsgeschwindigkeit (v) größer ist als die Messzeit (t$_i$), und
Wählen des verzögerten Zeitunterschiedes (dt'), wobei er als verzögert gewählt wird, sofern die Geschwindigkeit (v) derart beschaffen ist, dass das Verhältnis zwischen dem gegebenen Abstand (d) und der Bewegungsgeschwindigkeit (v) größer ist als die Messzeit (t$_i$).

7. Verfahren nach Anspruch 5 oder 6, **dadurch gekennzeichnet, dass** es das Betätigen jedes Erfassungssystems (5, 6) zum Erfassen jedes Halbprofils (P1, P2) der jeweiligen Seite (r1, r2) mit einem Abtastintervall umfasst, um so die dreidimensionale Rekonstruktion einer Seite (r1, r2) der Schiene (R) durch Interpolation zu gestatten, wobei das Verfahren weiterhin das Korrigieren der räumlichen Position der Halbprofile (P1, P2) jeder Seite (r1, r2) durch die Werte der gemessenen Abweichungen (dY, dz, dα) durch die Trägheitsplattform (25) und somit die Ausführung einer Interpolation dieser Halbprofile (P1, P2) umfasst, deren räumliche Position korrigiert wurde, um eine dreidimensionale Rekonstruktion der Schiene (R), insbesondere eine Verbindung der Halbprofile (P1, P2), deren räumliche Position korrigiert wurde, mit Translationsflächen auszuführen.

8. Verfahren nach einem der Ansprüche 2 bis 7, **dadurch gekennzeichnet, dass** es die Verwendung der Verschiebungen in vertikaler (dZ) und seitlicher (dY) Richtung vorsieht.

9. Verfahren nach einem der vorhergehenden Ansprüche, **dadurch gekennzeichnet, dass** es die Verwendung von Kameras (3, 4) vorsieht, die durch synchrones Lesen der Bildzeilen arbeiten.

10. System zum Messen eines Schienenprofils durch optische Triangulation, umfassend bewegliche optische Erfassungssysteme (5, 6), die mit Hilfe optischer Triangulation arbeiten und entlang der Schiene (R) mit einer Bewegungsgeschwindigkeit (v) beweglich sind, wobei die optischen Erfassungssysteme (5, 6) entsprechende Paare von lichtemittierenden Lasern (1, 2) für die Beleuchtung gegenüberliegender Seiten (r1, r2) der Schiene (R), um auf die Seiten (r1, r2) entsprechende Lichtpunkte (L) zu projizieren, die dazu eingerichtet sind, jeweilige optisch erfassbare Halbprofile (P1, P2) zu erzeugen, die kombiniert werden können, um ein Profil des Abschnittes der Schiene (R) zu erhalten, und optische Lesevorrichtungen (3, 4) zum Erfassen der Halbprofile (P1, P2) umfassen, **dadurch gekennzeichnet, dass** das System Einrichtungen umfasst, die dazu eingerichtet sind, das Verfahren nach einem der Ansprüche 1 bis 9 auszuführen.

11. System nach Anspruch 10, **dadurch gekennzeichnet**, das die optischen Erfassungssysteme (5, 6) mit einer Halterung (S) assoziiert sind, die integraler Bestandteil eines Schienenfahrzeuges ist.

12. System nach Anspruch 11, **dadurch gekennzeichnet, dass** die Trägheitsplattform (25) mit der Halterung (S) assoziiert ist.

13. System nach wenigstens einem der vorhergehenden Ansprüche 10 bis 12, **dadurch gekennzeichnet, dass** es ein Steuermodul (15) umfasst, das dazu eingerichtet ist, die Erfassungssysteme zu steuern und die Vorgänge für die Kombination und/oder Interpolation der Halbprofile (P1, P2) auszuführen.

**Revendications**

1. Procédé pour mesurer un profil de rail (R) par triangulation optique par l'intermédiaire de systèmes de détection optique (5, 6), agissant par triangulation optique et se déplaçant le long dudit rail (R) à une vitesse de déplacement (v), comprenant des paires respectives de lasers émettant de la lumière (1, 2) et de dispositifs de lecture optique (3, 4), comprenant les étapes :

- de déplacement desdits systèmes de détection optique (5, 6) le long dudit rail (R) à une vitesse de déplacement (v), et

- d'éclairage des côtés (r1, r2) opposés du rail (R) par l'intermédiaire des lasers émettant de la lumière (1, 2) respectifs, pour projeter sur lesdits côtés (r1, r2) des points de lumière (L) respectifs conçus pour générer des semi-profils (P1, P2) pouvant être détectés optiquement respectifs combinables pour obtenir une mesure du profil d'une section du rail (R), et

- de détection desdits semi-profils (P1, P2) par l'intermédiaire des dispositifs de lecture optique (3, 4) respectifs,

**caractérisé en ce que** le procédé

prévoit l'agencement desdits systèmes de détection optique (5, 6) mobiles par triangulation optique à une distance (d) donnée l'un par rapport à l'autre le long de la direction de déplacement (X) et actionne chaque système de détection (5, 6) à un instant de détection ($t_1$, $t_2$ ; $t_1$, $t'_2$) respectif pour détecter un semi-profil (P1, P2) du côté (r1, r2) respectif du rail (R), la différence (dt ; dt') entre lesdits instants de détection ($t_1$, $t_2$ ; $t_1$, $t'_2$) respectifs étant sélectionnée en fonction de la vitesse de déplacement (v) de la paire d'émetteurs laser (1, 2) par rapport au rail et de ladite distance (d) donnée.

2. Procédé selon la revendication 1, **caractérisé en ce qu'**il comprend une plateforme inertielle (25), d'un seul tenant avec lesdits systèmes de détection optique (5, 6) mobiles par triangulation optique, configurée pour mesurer les variations spatiales (dY, dz, d$\alpha$) desdits systèmes de détection optique (5, 6) par triangulation optique par rapport à ce rail (R), ledit procédé comprenant en outre la correction de la position spatiale d'au moins l'un desdits semi-profils (P1, P2) de chaque côté (r1, r2) par les valeurs desdits décalages mesurés (dY, dz, d$\alpha$) par l'intermédiaire de la plateforme inertielle (25).

3. Procédé selon la revendication 1 ou 2, **caractérisé en ce qu'**il comprend la sélection de la différence (dt ; dt') entre lesdits instants de détection ($t_1$, $t_2$ ; $t_1$, $t'_2$) respectifs en fonction d'une vitesse de déplacement (v) de la paire d'émetteurs laser (1, 2) par rapport au rail, de ladite distance (d) donnée et également d'un temps de mesure ($t_i$) du système de détection (5, 6), ledit temps de mesure ($t_i$) étant en particulier sélectionné en tant que plus grand temps entre une période d'exposition ($t_E$) de la caméra et une période d'acquisition ($t_c$) de la caméra.

4. Procédé selon la revendication 1 ou 2 ou 3, **caractérisé en ce que** ladite différence de temps (dt) est sélectionnée pour être équivalente au rapport entre ladite distance (d) donnée et ladite vitesse de déplacement (v) de la paire d'émetteurs laser (1, 2) par rapport au rail (R) pour mesurer les semi-profils (P1, P2) au niveau de la même coordonnée longitudinale (X) sur les côtés (r1, r2).

5. Procédé selon la revendication 1 ou 2 ou 3, **caractérisé en ce qu'**il comprend le fait de retarder un instant de détection suivant (t'2) entre lesdits instants de détection ($t_1$, $t'_2$) de manière à déterminer une différence de temps retardée (dt') pour la détection qui est supérieure ou équivalente au temps de mesure ($t_i$).

6. Procédé selon les revendications 4 et 5, **caractérisé en ce qu'**il comprend :

la sélection de ladite différence de temps (dt) pour qu'elle soit équivalente au rapport entre ladite distance (d) donnée et ladite vitesse de déplacement (v) de la paire d'émetteurs laser (1, 2) par rapport au rail (R) pour mesurer les semi-profils (P1, P2) au niveau de la même coordonnée longitudinale (X) sur les côtés (r1, r2), si ladite vitesse (v) est telle que ledit rapport ente ladite distance (d) donnée et ladite vitesse de déplacement (v) est supérieur au temps de mesure ($t_i$),

la sélection de ladite différence de temps retardée (dt') alors qu'elle est sélectionnée retardée si ladite vitesse (v) est telle que ledit rapport entre ladite distance (d) donnée et ladite vitesse de déplacement (v) est supérieur au temps de mesure ($t_i$) .

7. Procédé selon la revendication 5 ou 6, **caractérisé en ce qu'**il comprend l'actionnement de chaque système de détection (5, 6) pour détecter chaque semi-profil (P1, P2) du côté (r1, r2) respectif avec un intervalle d'échantillonnage tel qu'il permet la reconstruction tridimensionnelle d'un côté (r1, r2) du rail (R) par interpolation, le procédé comprenant en outre la correction de la position spatiale desdits semi-profils (P1, P2) de chaque côté (r1, r2) par les valeurs desdites variations mesurées (dY, dz, d$\alpha$) par l'intermédiaire de la plateforme inertielle (25), et ainsi l'exécution d'une interpolation de ces semi-profils (P1, P2) dont la position spatiale a été corrigée, pour effectuer une reconstruction tridimensionnelle du rail (R), en particulier la jonction, avec des surfaces de translation, des semi-profils (P1, P2) dont la position spatial a été corrigée.

8. Procédé selon l'une des revendications 2 à 7, **caractérisé en ce qu'**il prévoit l'utilisation des décalages dans les directions verticale (dZ) et latérale (dY).

9. Procédé selon l'une des revendications précédentes, **caractérisé en ce qu'**il prévoit l'utilisation de caméras (3, 4) qui agissent en lisant les rangées d'image d'une manière synchrone.

10. Système pour mesurer un profil de rail par triangulation optique comprenant des systèmes de détection optique (5, 6) mobiles, agissant par triangulation optique et pouvant être déplacés le long dudit rail (R) à une vitesse de déplacement (v), lesdits systèmes de détection optique (5, 6) comprenant des paires respectives de lasers émettant de la lumière (1, 2) pour éclairer les côtés (r1, r2) opposés du rail (R) pour projeter, sur lesdits côtés (r1, r2), des points de lumière (L) respectifs conçus pour générer des semi-profils (P1, P2) respectifs pouvant être détectés optiquement combinables pour obtenir un profil de la section du rail (R) et de dispositifs de lecture optique (3, 4), pour détecter lesdits semi-profils (P1, P2),
**caractérisé en ce que** ledit système comprend des moyens configurés pour mettre en oeuvre le procédé selon l'une des revendications 1 à 9.

11. Système selon la revendication 10, **caractérisé en ce que** lesdits systèmes de détection optique (5, 6) sont associés à un support (S) d'un seul tenant avec un véhicule de chemin de fer.

12. Système selon la revendication 11, **caractérisé en ce que** ladite plateforme inertielle (25) est associée au dit support (S).

13. Système selon une ou plusieurs des revendications 10 à 12 précédentes, **caractérisé en ce qu'**il comprend un module de commande (15) configuré pour commander les systèmes de détection et effectuer lesdites opérations pour la combinaison et/ou l'interpolation des semi-profils (P1, P2).

Fig. 1

EP 2 485 010 B1

Fig. 2

EP 2 485 010 B1

Fig. 3

Fig. 4

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 1308420
- US 20020024677 A1
- US 2006017935 A1
- US 2003140509 A1